# EUROPÄISCHE PATENTSCHRIFT

(11) **EP 3 380 372 B1**
(45) Veröffentlichungstag und Bekanntmachung des Hinweises auf die Patenterteilung: **01.05.2019**
(21) Anmeldenummer: 16797743.8
(22) Anmeldetag: 14.11.2016
(51) Int. Cl.: B60T 13/14, B60T 8/48, B60T 13/68

(54) **HYDRAULISCHE BREMSANLAGE**
HYDRAULIC BRAKE SYSTEM
SYSTÈME DE FREIN HYDRAULIQUE

(30) Priorität: 28.11.2015 DE 102015015472
(43) Veröffentlichungstag der Anmeldung: 03.10.2018
(73) Patentinhaber: WABCO GmbH, 30453 Hannover (DE)
(72) Erfinder: BRÜTT, Mirko, 30952 Ronnenberg (DE); HAVERKAMP, Michael, 30455 Hannover (DE)
(74) Vertreter: Krause, Martin
(86) Internationale Anmeldenummer: PCT/EP2016/001893
(87) Internationale Veröffentlichungsnummer: WO 2017/088959

(56) Entgegenhaltungen:
- EP-A2- 1 013 528
- DE-A1- 19 546 056
- JP-A- H0 680 064

## Beschreibung

Die Erfindung betrifft eine fremdkraftgestützte hydraulische Bremsanlage eines Radfahrzeugs, mit einer Hauptbremsleitung, in die mittels eines über ein Bremspedal betätigbaren Bremsventils ein Soll-Bremsdruck einsteuerbar ist, und von der mehrere jeweils zu einer Betätigungseinheit einer Radbremse führende Radbremsleitungen abzweigen, sowie mit einer Ventilanordnung einer ABS-Steuerung, die jeweils ein zwischen der Hauptbremsleitung und einer der Radbremsleitungen angeordnetes Einlassventil sowie ein zwischen der betreffenden Radbremsleitung und einer drucklosen Rücklaufleitung angeordnetes Auslassventil umfasst.

Während Personenkraftwagen und leichte Nutzfahrzeuge üblicherweise eine pedalkraftgestützte hydraulische Bremsanlage und schwerere Nutzfahrzeuge eine fremdkraftgestützte pneumatische Bremsanlage aufweisen, können Radfahrzeuge, die, wie Baumaschinen und Ackerschlepper, für einen Off-Highway-Einsatz vorgesehen sind, mit einer fremdkraftgestützten hydraulischen Bremsanlage ausgerüstet sein. Aufgrund der erforderlichen hohen Bremskräfte weisen die Betätigungseinheiten der Radbremsen, wie Radbremszylinder und Bremssättel, bei derartigen Radfahrzeugen ein relativ großes Verdrängungsvolumen auf, das nur mit einer fremdkraftgestützten Bremsanlage gefördert werden kann. Da Baumaschinen und Ackerschlepper üblicherweise über hydraulische Arbeitsgeräte verfügen oder sogar einen hydrostatischen Antrieb aufweisen, kann eine fremdkraftgestützte hydraulische Bremsanlage vorteilhaft die ohnehin vorhandene hydraulische Druckversorgungseinrichtung nutzen.

Vorliegend wird von einer fremdkraftgestützten hydraulischen Bremsanlage eines Radfahrzeugs ausgegangen, die eine Hauptbremsleitung und mehrere von der Hauptbremsleitung abzweigende sowie jeweils zu einer Betätigungseinheit einer Radbremse führende Radbremsleitungen und eine Ventilanordnung einer ABS-Steuerung (Antiblockiersystem-Steuerung) umfasst. In die Hauptbremsleitung ist mittels eines Bremsventils, das von einem Fahrer über ein Bremspedal betätigbar ist, ein Soll-Bremsdruck einsteuerbar. Bei einer Ausführung der Radbremsen als Trommelbremsen sind die Betätigungseinheiten der Radbremsen üblicherweise als Radbremszylinder ausgebildet, über deren Kolben die betreffenden Bremsbacken zum Abbremsen der Fahrzeugräder gegen die drehfest mit den Radnaben verbundenen Bremstrommeln gedrückt werden. Bei einer Ausführung der Radbremsen als Scheibenbremsen handelt es sich bei den Betätigungseinheiten der Radbremsen üblicherweise um Bremssättel, in denen die betreffenden Bremsbeläge zum Abbremsen der Fahrzeugräder mittels Kolben gegen drehfest mit den Radnaben verbundenen Bremsscheiben gedrückt werden.

Die Ventilanordnung der ABS-Steuerung umfasst jeweils ein zwischen der Haupbremsleitung und einer der Radbremsleitungen angeordnetes Einlassventil sowie ein zwischen der betreffenden Radbremsleitung und einer drucklosen Rücklaufleitung angeordnetes Auslassventil. Im unbetätigten Zustand sind die Einlassventile geöffnet und die Auslassventile geschlossen, so dass der von dem Fahrer vorgegebene Soll-Bremsdruck auch in den Radbremsleitungen und den an diese angeschlossenen Betätigungseinheiten der Radbremsen wirksam ist. Demzufolge wird das betreffende Radfahrzeug dann entsprechend der Betätigung des Bremspedals durch den Fahrer abgebremst. Wenn während eines Bremsvorgangs durch die Auswertung von an den Fahrzeugrädern angeordneten Drehzahlsensoren jedoch ein blockiertes oder kurz vor dem Blockieren befindliches Fahrzeugrad festgestellt wird, so wird das Einlassventil der betreffenden Betätigungseinheit geschlossen und das zugeordnete Auslassventil geöffnet, so dass die Radbremse des betreffenden Fahrzeugrades gelöst wird. Wenn das betreffende Fahrzeugrad wieder mit ausreichend hoher Drehzahl rotiert, wird das Einlassventil dieser Betätigungseinheit wieder geöffnet und das zugeordnete Auslassventil so lange geschlossen, bis an dem betreffenden Fahrzeugrad erneut eine große Drehzahlreduzierung festgestellt wird. Durch wechselweises Öffnen und Schließen der Einlassventile sowie der Auslassventile wird somit ein Blockieren der Fahrzeugräder verhindert und dadurch die Brems- und Lenkbarkeit des betreffenden Radfahrzeugs erhalten.

Um bei störungsbedingt gleichzeitig geschlossenen Ein- und Auslassventilen dann, wenn durch das Lösen des Bremspedals in einer der Radbremsleitungen ein höherer Bremsdruck als in der Hauptbremsleitung eingeschlossen ist, einen Abbau des Bremsdruckes über die Hauptbremsleitung und das Bremsventil zu ermöglichen, sind üblicherweise Sicherheitsventile vorgesehen. Diese Sicherheitsventile können in Form von jeweils parallel zu den Einlassventilen zwischen den Radbremsleitungen und der Hauptbremsleitung angeordneten, in Richtung der Hauptbremsleitung öffnenden Rückschlagventilen oder in Form von in die Einlassventile integrierten Rückschlagventilen mit Öffnungsrichtung zur Hauptbremsleitung realisiert sein.

In der DE 195 46 056 A1 und der EP 1 013 528 B1 sind fremdkraftgestützte hydraulische Bremsanlagen eines Kraftfahrzeugs beschrieben, die jeweils zwei Bremskreise, eine Ventilanordnung einer ABS-Steuerung und eine Ventilanordnung einer ASR-Steuerung umfassen. Die Einlassventile und die Auslassventile der Ventilanordnung der ABS-Steuerung sind dort jeweils als 2/2-Wege-Magnetschaltventile ausgebildet. Während die Sicherheitsventile bei der Ventilanordnung der ABS-Steuerung gemäß der DE 195 46 056 A1 als jeweils parallel zu den Einlassventilen angeordnete Rückschlagventile ausgebildet sind, weist die Ventilanordnung der ABS-Steuerung gemäß der EP 1 013 528 B1 hierzu in die Einlassventile integrierte Rückschlagventile beziehungsweise Rückschlagventilfunktionen auf.

Insbesondere für große und schwere Ackerschlepper mit entsprechend groß dimensionierten Radbremsen sind bei einer Ausrüstung mit einer fremdkraftgestützten hydraulischen Bremsanlage Ventilanordnungen der ABS-Steuerung mit hohen Volumendurchsätzen und möglichst großer ABS-Regelfrequenz sinnvoll. Diese Anforderung ist mit als Magnetschaltventile ausgebildeten Ein- und Auslassventilen kaum realisierbar, da entweder die Schaltquerschnitte der Magnetschaltventile hierfür zu klein sind oder die Schaltdynamik der Magnetschaltventile zu niedrig und deren Stromaufnahme zu hoch ist.

Von der Firma MICO Inc., USA werden für die ABS-Steuerung von schweren Radfahrzeugen für den Off-Highway-Einsatz ABS-Regelventile angeboten, die als 3/3-Wege-Proportional-Magnetventile ausgebildet sind und jeweils die Funktionen eines Einlassventils und eines Auslassventils zusammenfassen. Informationen über diese ABS-Regel-ventile sind der Broschüre "Electrohydraulic Components" (Form No. 84-850-028) zu entnehmen, die als pdf-Dokument von der Homepage der Fa. MICO Inc. (www.mico.com) heruntergeladen werden kann. Derartige ABS-Regelventile sind zwar für einen hohen Volumendurchsatz ausgelegt, ermöglichen aber nur eine relativ niedrige ABS-Regelfrequenz.

Aufgrund der zukünftigen Anforderungen an die Bremsanlagen von schweren Radfahrzeugen für den Off-Highway-Einsatz liegt der Erfindung die Aufgabe zugrunde, eine Ventilanordnung einer ABS-Steuerung der eingangs genannten Bauart für eine fremdkraftgestützte hydraulische Bremsanlage eines Radfahrzeugs anzugeben, die einen hohen Volumendurchsatz mit einer hohen ABS-Regelfrequenz und einem geringen Energieaufwand für die Ansteuerung der ABS-Ventile (Ein- und Auslassventile) verbindet.

Diese Aufgabe ist in Verbindung mit den Merkmalen des Oberbegriffs des Anspruchs 1 dadurch gelöst, dass das Einlassventil und das Auslassventil als druckgesteuerte 2/2-Wege-Schaltventile mit entsprechend großen Schaltquerschnitten ausgebildet sind, und dass dem Einlassventil und dem Auslassventil jeweils mindestens ein als Magnetschaltventil ausgebildetes Vorsteuerventil zugeordnet ist, über das ein Steueranschluss des betreffenden Ein- oder Auslassventils zur Umschaltung wechselweise mit einem Steuerdruck beaufschlagt oder entlüftet wird.

Die Erfindung geht von einer an sich bekannten fremdkraftgestützten hydraulischen Bremsanlage eines Radfahrzeugs mit einer Hauptbremsleitung und einer Ventilanordnung einer ABS-Steuerung aus. In die Hauptbremsleitung ist mittels eines über ein Bremspedal betätigbaren Bremsventils ein Soll-Bremsdruck einsteuerbar. Von der Hauptbremsleitung zweigen mehrere jeweils zu einer Betätigungseinheit einer Radbremse, wie Radbremszylinder oder Bremssättel, führende Radbremsleitungen ab. Die Ventilanordnung der ABS-Steuerung umfasst jeweils ein zwischen der Hauptbremsleitung und einer der Radbremsleitungen angeordnetes Einlassventil und ein zwischen der betreffenden Radbremsleitung und einer drucklosen Rücklaufleitung angeordnetes Auslassventil.

Um den für die Radbremsen schwerer, für den Off-Highway-Einsatz vorgesehener Radfahrzeuge erforderlichen hohen Volumendurchsatz in Verbindung mit einer hohen ABS-Regelfrequenz und einem geringen Energieaufwand für die Ansteuerung der ABS-Ventile zu realisieren, sind das Einlassventil und das Auslassventil als druckgesteuerte 2/2-Wege-Schaltventile mit entsprechend großen Schaltquerschnitten ausgebildet, die jeweils über mindestens ein als Magnetschaltventil ausgebildetes Vorsteuerventil ansteuerbar sind, so dass ein Steueranschluss des betreffenden Ein- oder Auslassventils zur Umschaltung
über das zugeordnete Vorsteuerventil beziehungsweise die zugeordneten Vorsteuerventile wechselweise mit einem Steuerdruck beaufschlagt oder entlüftet wird.

Die als Vorsteuerventile genutzten Magnetventile weisen eine hohe Schaltdynamik und eine geringe Stromaufnahme ihrer Magnetspulen auf, so dass die Ventilanordnung der ABS-Steuerung insgesamt einen hohen Volumendurchsatz mit einer hohen ABS-Regelfrequenz und einem geringen Energieaufwand für die Ansteuerung ihrer ABS-Ventile verbindet.

Gemäß einer ersten Basisausführung der Vorsteuerventile ist vorgesehen, dass dem Einlassventil und/oder dem Auslassventil jeweils ein als 3/2-Wege-Magnetschaltventil ausgebildetes Vorsteuerventil zugeordnet ist, das zwischen˙einer mit einer Druckquelle in Verbindung stehenden Hochdruckleitung, einer zu dem betreffenden Steueranschluss führenden Steuerdruckleitung und einer mit einer Drucksenke in Verbindung stehenden Niederdruckleitung angeordnet ist, wobei die Steuerdruckleitung im unbestromten Zustand des betreffenden Vorsteuerventils mit der Niederdruckleitung verbunden sowie gegenüber der Hochdruckleitung abgesperrt ist, und wobei die Steuerdruckleitung im bestromten Zustand des betreffenden Vorsteuerventils mit der Hochdruckleitung verbunden sowie gegenüber der Niederdruckleitung abgesperrt ist.

Gemäß einer zweiten Basisausführung der Vorsteuerventile ist vorgesehen, dass dem Einlassventil und/oder dem Auslassventil jeweils zwei als 2/2-Wege-Magnetschaltventile ausgebildete Vorsteuerventile zugeordnet sind, von denen das erste Vorsteuerventil zwischen einer mit einer Druckquelle in Verbindung stehenden Hochdruckleitung und einer zu dem betreffenden Steueranschluss führenden Steuerdruckleitung angeordnet ist, die im unbestromten Zustand des ersten Vorsteuerventils gegeneinander abgesperrt sowie im bestromten Zustand des ersten Vorsteuerventils miteinander verbunden sind, und von denen das zweite Vorsteuerventil zwischen der Steuerdruckleitung und einer mit einer Drucksenke in Verbindung stehenden Niederdruckleitung angeordnet ist, die im unbestromten Zustand des zweiten Vorsteuerventils miteinander verbunden sowie im bestromten Zustand des zweiten Vorsteuerventils gegeneinander abgesperrt sind.

Bei beiden Basisausführungen der Vorsteuerventile wird somit der in der Druckquelle vorliegende Druck als hoher Steuerdruck und der in der Drucksenke herrschende Druck als niedriger Steuerdruck verwendet. Üblicherweise werden in einer Ventilanordnung einer ABS-Steuerung gleichartige Magnetventile zur Ansteuerung der Ein- und Auslassventile verwendet, um die Ansteuerung zu vereinfachen und durch die Verwendung baugleicher Vorsteuerventile Herstellkosten einzusparen. Grundsätzlich ist es jedoch auch möglich, in einer Ventilanordnung einer ABS-Steuerung unterschiedliche Bauarten von Vorsteuerventilen zu verwenden, zum Beispiel die Einlassventile über jeweils zwei 2/2-Wege-Magnet-schaltventile und die Auslassventile über jeweils ein 3/2-Wege-Magnetschaltventil anzusteuern.

Hinsichtlich des zur Ansteuerung der ABS-Ventile (Einlassventil und Auslassventil) verwendeten Druckmittels kann vorgesehen sein, dass das Einlassventil und das Auslassventil hydraulisch steuerbar ausgebildet sind, dass die zu den zugeordneten Vorsteuerventile führenden hydraulischen Hochdruckleitungen von einer hydraulischen Steuerdruck-Hauptleitung abzweigen, die an eine hydraulische Hauptdruckleitung einer hydraulischen Druckversorgungsanlage angeschlossen ist, und dass die an den zugeordneten Vorsteuerventile angeschlossenen hydraulischen Niederdruckleitungen in einen drucklosen Sammelbehälter führen.

Zwar könnten die Hochdruckleitungen auch unmittelbar an eine von der Hauptbremsleitung abzweigende Verbindungsleitung angeschlossen sein, der in der Hauptbremsleitung herrschende Soll-Bremsdruck ist allerdings variabel und von der Betätigung des Bremspedals abhängig, wodurch die ABS-Regelung, insbesondere bei schwacher Betätigung der Radbremsen und besonders rutschiger Fahrbahn, wie bei Glatteis oder bei lockerem Untergrund, beeinträchtigt werden kann. In der Hauptdruckleitung liegt dagegen ein weitgehend konstanter Druck vor, so dass das Ansprechverhalten der ABS-Ventile unabhängig von dem in die Hauptbremsleitung eingesteuerten Soll-Bremsdruck immer gleich ist. Die Niederdruckleitungen der zugeordneten Vorsteuerventile führen wie erwähnt in diesem Fall jeweils in einen drucklosen Sammelbehälter, der über eine Rücklaufleitung mit einem Sammelbehälter der hydraulischen Druckversorgungsanlage in Verbindung stehen kann.

Da die Strömungsgeschwindigkeit des Hydrauliköls in den Steuerdruckleitungen und den Vorsteuerventilen sowie damit das Ansprechverhalten der ABS-Ventile wesentlich von der temperaturabhängigen Zähflüssigkeit des Hydrauliköls bestimmt wird, ist in der hydraulischen Druckversorgungsanlage gemäß einer Ausführungsform ein Temperatursensor zur Erfassung der Öltemperatur des verfügbaren Hydrauliköls vorgesehen. Somit kann der Steueralgorithmus zur Ansteuerung der Vorsteuerventile an die jeweils vorliegende Öltemperatur des Hydrauliköls angepasst werden.

Ebenso ist in der hydraulischen Druckversorgungsanlage vorzugsweise ein Heizelement zur Erwärmung des verfügbaren Hydrauliköls vorgesehen. In Radfahrzeugen, wie Baumaschinen und Ackerschleppern, die für einen Off-Highway-Einsatz vorgesehen sind, wird insbesondere für den Antrieb von Arbeitsgeräten häufig Hydrauliköl mit besonders hoher Viskosität verwendet. Im kalten Zustand führt die dann vorliegende hohe Zähflüssigkeit des Hydrauliköls zwangsläufig zu einem verzögerten Ansprechverhalten der ABS-Ventile, das durch die Aufheizung des Hydrauliköls mittels des Heizelementes vermieden werden kann. Durch die Überwachung der Öltemperatur des Hydrauliköls mittels des Temperatursensors kann das Heizelement rechtzeitig abgeschaltet und damit eine Überhitzung des Hydrauliköls vermieden werden.

Der Temperatursensor und/oder das Heizelement sind bevorzugt an oder in einem Speicherbehälter der hydraulischen Druckversorgungsanlage angeordnet, da mit dieser Anordnung eine genaue Erfassung der Öltemperatur und eine effektive Erwärmung des Hydrauliköls erfolgen können.

Alternativ zu einer hydraulischen Ansteuerung können das Einlassventil und das Auslassventil auch pneumatisch steuerbar ausgebildet sein. Dies setzt zwar eine pneumatische Druckversorgungsanlage voraus, hat aber den Vorteil, dass als Vorsteuerventile baugleiche Magnetschaltventile verwendet werden können, die üblicherweise auch in Druckluftbremsanlagen zur Anwendung kommen. Die Hochdruckleitungen der zugeordneten Vorsteuerventile zweigen in diesem Fall bevorzugt von einer Steuerdruck-Hauptleitung ab, die an eine pneumatische Hauptdruckleitung einer pneumatischen Druckversorgungsanlage angeschlossen ist, in der ein weitgehend konstanter Druck vorliegt. Die pneumatischen Niederdruckleitungen der zugeordneten Vorsteuerventile führen jeweils zu einem Entlüftungsausgang, bei dem es sich um einen gemeinsamen oder einen separaten Entlüftungsausgang handeln kann.

Die Erfindung wird nachstehend anhand von vier in der beigefügten Zeichnung dargestellten Ausführungsbeispielen näher erläutert. In der Zeichnung zeigt
- Fig. 1: eine fremdkraftgestützte hydraulische Bremsanlage eines Radfahrzeugs mit einer erfindungsgemäßen ersten Ventilanordnung einer ABS-Steuerung in einer schematischen Ansicht,
- Fig. 2: eine fremdkraftgestützte hydraulische Bremsanlage eines Radfahrzeugs mit einer erfindungsgemäßen zweiten Ventilanordnung einer ABS-Steuerung in einer schematischen Ansicht,
- Fig. 3: eine Weiterbildung der hydraulischen Bremsanlage gemäß Fig. 1 in einer schematischen Ansicht,
- Fig. 4: eine Weiterbildung der hydraulischen Bremsanlage gemäß Fig. 2 in einer schematischen Ansicht,
- Fig. 5: eine fremdkraftgestützte hydraulische Bremsanlage eines Radfahrzeugs mit einer erfindungsgemäßen dritten Ventilanordnung einer ABS-Steuerung in einer schematischen Ansicht, und
- Fig. 6: eine fremdkraftgestützte hydraulische Bremsanlage eines Radfahrzeugs mit einer erfindungsgemäßen vierten Ventilanordnung einer ABS-Steuerung in einer schematischen Ansicht.

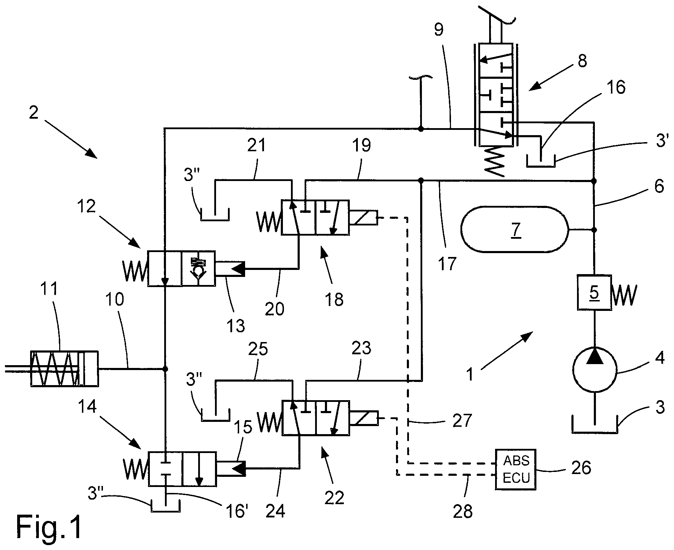

In Fig. 1 ist ein Ausschnitt aus einer fremdkraftgestützten hydraulischen Bremsanlage eines Radfahrzeugs in schematischer Form abgebildet, die eine hydraulische Druckversorgungsanlage 1 und eine einer einzelnen Radbremse zugeordnete Ventilanordnung 2 einer Antiblockiersystem-Steuerung (ABS-Steuerung) umfasst.

In der hydraulischen Druckversorgungsanlage 1 ist Hydrauliköl mittels einer Ölpumpe 4 aus einem Sammelbehälter 3 über ein Druckbegrenzungsventil 5 in eine hydraulische Hauptdruckleitung 6 förderbar. An diese hydraulische Hauptdruckleitung 6 sind ein Speicherbehälter 7 und ein Bremsventil 8 angeschlossen. Der Speicherbehälter 7 ist zumindest teilweise mit unter dem Hauptdruck der hydraulischen Hauptdruckleitung 6 stehenden Hydrauliköl gefüllt. Über das Bremsventil 8, das als ein 3/3-Wege-Proportionalventil ausgebildet und mittels eines Bremspedals betätigt wird, ist ein Soll-Bremsdruck in eine angeschlossene Hauptbremsleitung 9 einsteuerbar. Im unbetätigten Ruhezustand des Bremsventils 8 steht die Hauptbremsleitung 9 mit einer drucklosen, in einen Sammelbehälter 3' führenden Rücklaufleitung 16 in Verbindung, wodurch die Hauptbremsleitung 9 entlüftet ist. Im über das Bremspedal maximal betätigten Zustand des Bremsventils 8 steht die Hauptbremsleitung 9 ungedrosselt mit der hydraulischen Hauptdruckleitung 6 in Verbindung, wodurch der in der Hauptbremsleitung 9 herrschende Soll-Bremsdruck dem in der hydraulischen Hauptdruckleitung 6 vorliegenden Hauptdruck entspricht. Der in der Hauptbremsleitung 9 herrschende Soll-Bremsdruck ist somit über das Bremsventil 8 zwischen dem Umgebungsdruck und dem Hauptdruck einstellbar.

Von der Hauptbremsleitung 9 zweigt eine zu einer Betätigungseinheit 11 einer nicht näher dargestellten Radbremse führende Radbremsleitung 10 ab. Vorliegend ist die Radbremse beispielhaft als eine Trommelbremse ausgeführt, deren Betätigungseinheit 11 durch einen Radbremszylinder gebildet ist. Die Ventilanordnung 2 der ABS-Steuerung umfasst ein zwischen der Hauptbremsleitung 9 und der Radbremsleitung 10 angeordnetes Einlassventil 12 sowie ein zwischen der Radbremsleitung 10 und einer in einen Sammelbehälter 3" führenden drucklosen Rücklaufleitung 16' angeordnetes Auslassventil 14.

Erfindungsgemäß sind das Einlassventil 12 und das Auslassventil 14 als hydraulisch druckgesteuerte 2/2-Wege-Schaltventile mit entsprechend großen Schaltquerschnitten ausgebildet, denen vorliegend jeweils ein als 3/2-Wege-Magnetschaltventil ausgebildetes Vorsteuerventil 18, 22 zugeordnet ist. Über die Vorsteuerventile 18, 22 ist jeweils ein Steueranschluss 13, 15 des betreffenden Ein- oder Auslassventils 12, 14 zur Umschaltung wechselweise mit einem niedrigen oder hohen Steuerdruck beaufschlagbar.

Im unbetätigten, also mit dem niedrigen Steuerdruck beaufschlagten Zustand des Einlassventils 12 ist die Radbremsleitung 10 mit der Hauptbremsleitung 9 verbunden, wodurch die Radbremse mit dem Soll-Bremsdruck betätigt wird. Im betätigten, also mit dem hohen Steuerdruck beaufschlagten Zustand des Einlassventils 12 ist die Radbremsleitung 10 gegenüber der Hauptbremsleitung 9 abgesperrt. Über ein in das Einlassventil 12 integriertes Rückschlagventil ist dann jedoch eine Belüftung der Radbremsleitung 10 über die Hauptbremsleitung 9 und das Bremsventil 8 möglich, was bei zwischenzeitlich gelöstem Bremspedal und dadurch abgesenktem Soll-Bremsdruck zur Wirkung kommt.

Im unbetätigten Zustand des Auslassventils 14 ist die Radbremsleitung 10 gegenüber der Rücklaufleitung 16' abgesperrt. Im betätigten Zustand des Auslassventils 14 ist die Radbremsleitung 10 mit der Rücklaufleitung 16' verbunden, wodurch der Radbremszylinder 11 belüftet und die Radbremse gelöst wird.

Durch die Ausbildung und Anordnung der Ventilanordnung 2 weisen die Ein- und Auslassventile 12, 14 einen hohen Volumendurchsatz und eine hohe Regelfrequenz der ABS-Steuerung auf. Zudem ist der Energieaufwand zur Ansteuerung der Ein- und Auslassventile 12, 14 über die Vorsteuerventile 18, 22 relativ niedrig.

Das Vorsteuerventil 18 des Einlassventils 12 ist zwischen einer hydraulischen Hochdruckleitung 19, die von einer an die hydraulische Hauptdruckleitung 6 angeschlossenen hydraulischen Steuerdruck-Hauptleitung 17 abzweigt, einer zu dem Steueranschluss 13 des Einlassventils 12 führenden Steuerdruckleitung 20, und einer in einen Sammelbehälter 3" führenden hydraulischen Niederdruckleitung 21 angeordnet. Im Ruhezustand, also im unbestromten Zustand der Magnetspule des Vorsteuerventils 18, ist die Steuerdruckleitung 20 gegenüber der hydraulischen Hochdruckleitung 19 abgesperrt und mit der hydraulischen Niederdruckleitung 21 verbunden. Im Betätigungszustand, also im bestromten Zustand der Magnetspule des Vorsteuerventils 18, ist die Steuerdruckleitung 20 mit der hydraulischen Hochdruckleitung 19 verbunden und gegenüber der hydraulischen Niederdruckleitung 21 abgesperrt. Somit wird der Steueranschluss 13 des Einlassventils 12 im unbetätigten Zustand des zugeordneten Vorsteuerventils 18 mit dem niedrigen Steuerdruck beziehungsweise Umgebungsdruck beaufschlagt, wodurch das Einlassventil 12 in seiner in Fig. 1 abgebildeten Ruhestellung verbleibt beziehungsweise in diese umgeschaltet wird. Im betätigten Zustand des Vorsteuerventils 18 wird der Steueranschluss 13 des Einlassventils 12 dagegen mit dem in der hydraulischen Hauptdruckleitung 6 herrschenden Hauptdruck beaufschlagt, wodurch das Einlassventil 12 in seine Betätigungsstellung umgeschaltet wird beziehungsweise in dieser verbleibt.

Das Vorsteuerventil 22 des Auslassventils 14 ist zwischen einer von der hydraulischen Steuerdruck-Hauptleitung 17 abzweigenden hydraulischen Hochdruckleitung 23, einer zu dem Steueranschluss 15 des Auslassventils 14 führenden Steuerdruckleitung 24, und einer in einen Sammelbehälter 3" führenden hydraulischen Niederdruckleitung 25 angeordnet. Im Ruhezustand des Vorsteuerventils 22 ist die Steuerdruckleitung 24 gegenüber der hydraulischen Hochdruckleitung 23 abgesperrt und mit der hydraulischen Niederdruckleitung 25 verbunden. Im Betätigungszustand des Vorsteuerventils 22 ist die Steuerdruckleitung 24 mit der hydraulischen Hochdruckleitung 23 verbunden und gegenüber der hydraulischen Niederdruckleitung 25 abgesperrt. Somit wird der Steueranschluss 15 des Auslassventils 14 im unbetätigten Zustand des zugeordneten Vorsteuerventils 22 mit dem niedrigen Steuerdruck beziehungsweise Umgebungsdruck beaufschlagt, wodurch das Auslassventil 14 in seiner Ruhestellung verbleibt beziehungsweise in diese umgeschaltet wird. Im betätigten Zustand des Vorsteuerventils 22 wird der Steueranschluss 15 des Auslassventils 14 dagegen mit dem in der hydraulischen Hauptdruckleitung 6 herrschenden Hauptdruck beaufschlagt, wodurch das Auslassventil 14 in seine Betätigungsstellung umgeschaltet wird beziehungsweise in dieser verbleibt.

Der in Fig. 1 separat dargestellte pumpennahe Sammelbehälter 3' des Bremsventils 8 ist zumeist identisch mit dem Sammelbehälter 3 der Druckluftversorgungsanlage 1 oder steht mit diesem über eine Rücklaufleitung in Verbindung. Die in Fig. 1 aus Platzgründen getrennt dargestellten Sammelbehälter 3" des Auslassventils 14 und der beiden Vorsteuerventile 18, 22 sind üblicherweise durch einen einzigen Sammelbehälter gebildet, der über eine Rücklaufleitung mit dem Sammelbehälter 3 der Druckluftversorgungsanlage 1 in Verbindung steht.

Bei einer ABS-Steuerung, bei der die beiden Vorsteuerventile 18, 22 über elektrische Steuerleitungen 27, 28 von einer elektronischen Steuereinheit 26 angesteuert werden, wird durch wechselweises Öffnen und Schließen des Einlassventils 12 sowie des Auslassventils 14 der in der Radbremsleitung 10 herrschende und in dem Radbremszylinder 11 der Radbremse wirksame Bremsdruck derart moduliert, dass ein Blockieren des betreffenden Fahrzeugrades verhindert wird, und das Radfahrzeug brems- und lenkfähig bleibt. Da der hohe Steuerdruck über die hydraulische Steuerdruck-Hauptleitung 17 an der hydraulischen Hauptdruckleitung 6 abgegriffen wird, die unter einem konstant hohen Hauptdruck steht, erfolgt die Umschaltung der ABS-Ventile 12, 14 im Rahmen der ABS-Steuerung unabhängig von dem über das Bremsventil 8 in die Hauptdruckleitung 9 eingesteuerten Soll-Bremsdruck gleich schnell.

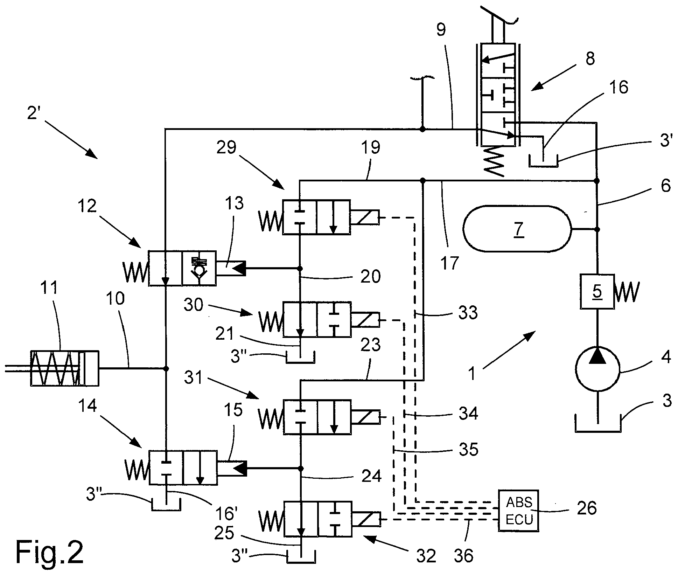

Bei einer in Fig. 2 in schematischer Form abgebildeten fremdkraftgestützten hydraulischen Bremsanlage eines Radfahrzeugs unterscheidet sich die Ventilanordnung 2' der ABS-Steuerung bei gleicher Ausführung des Einlassventils 12 und des Auslassventils 14 von der Ventilanordnung 2 gemäß Fig. 1 durch eine andere Ausführung der Vorsteuerventile. Nun sind dem Einlassventil 12 und dem Auslassventil 14 jeweils zwei als 2/2-Wege-Magnetschaltventile ausgebildete Vorsteuerventile 29, 30; 31, 32 zugeordnet, über die der jeweilige Steueranschluss 13, 15 des betreffenden Ein- oder Auslassventils 12, 14 zur Umschaltung wechselweise mit einem niedrigen oder hohen Steuerdruck beaufschlagbar ist.

Das erste Vorsteuerventil 29 des Einlassventils 12 ist zwischen der an die hydraulische Steuerdruck-Hauptleitung 17 angeschlossenen hydraulischen Hochdruckleitung 19 und der zu dem Steueranschluss 13 des Einlassventils 12 führenden Steuerdruckleitung 20 angeordnet. Im Ruhezustand, also im unbestromten Zustand der Magnetspule des ersten Vorsteuerventils 29, sind die hydraulische Hochdruckleitung 19 und die Steuerdruckleitung 20 gegeneinander abgesperrt und im Betätigungszustand, also im bestromten Zustand der Magnetspule des ersten Vorsteuerventils 29 miteinander verbunden. Das zweite Vorsteuerventil 30 des Einlassventils 12 ist zwischen der Steuerdruckleitung 20 und einer in einen Sammelbehälter 3" führenden hydraulischen Niederdruckleitung 21 angeordnet. Im Ruhezustand, also unbestromten Zustand der Magnetspule des zweiten Vorsteuerventils 30 sind die Steuerdruckleitung 20 und die hydraulische Niederdruckleitung 21 miteinander verbunden sowie im Betätigungszustand, also im bestromten Zustand der Magnetspule des zweiten Vorsteuerventils 30 gegeneinander abgesperrt.

Somit wird der Steueranschluss 13 des Einlassventils 12 im unbetätigten Zustand der beiden zugeordneten Vorsteuerventile 29, 30 mit dem niedrigen Steuerdruck beziehungsweise Umgebungsdruck beaufschlagt. Demzufolge befindet sich das Einlassventil 12 dann in der abgebildeten Ruhestellung, in der die Radbremsleitung 10 mit der Hauptbremsleitung 9 verbunden ist. Durch eine Betätigung, also das Umschalten der zugeordneten Vorsteuerventile 29, 30, wird die Steuerdruckleitung 20 von der hydraulischen Niederdruckleitung 21 getrennt und über das erste Vorsteuerventil 29 mit der hydraulischen Hochdruckleitung 19 verbunden. Hierdurch wird der Steueranschluss 13 des Einlassventils 12 mit dem in der hydraulischen Hauptdruckleitung 6 herrschenden Hauptdruck beaufschlagt, wodurch das Einlassventil 12 in seine Betätigungsstellung umgeschaltet wird, in der die Radbremsleitung 10 gegenüber der Hauptbremsleitung 9 abgesperrt ist. Die Funktionalität der beiden Vorsteuerventile 29, 30 des Einlassventils 12 entspricht somit der Funktionalität des Vorsteuerventils 18 der Ventilanordnung 2 gemäß Fig. 1.

Das erste Vorsteuerventil 31 des Auslassventils 14 ist zwischen der an die hydraulische Steuerdruck-Hauptleitung 17 angeschlossenen Hochdruckleitung 23 und der zu dem Steueranschluss 15 des Auslassventils 14 führenden Steuerdruckleitung 24 angeordnet. Im Ruhezustand des ersten Vorsteuerventils 31 sind die Hochdruckleitung 23 und die Steuerdruckleitung 24 gegeneinander abgesperrt und im Betätigungszustand des ersten Vorsteuerventils 31 miteinander verbunden. Das zweite Vorsteuerventil 32 des Auslassventils 14 ist zwischen der Steuerdruckleitung 24 und einer in einen Sammelbehälter 3" führenden hydraulischen Niederdruckleitung 25 angeordnet. Im Ruhezustand des zweiten Vorsteuerventils 32 sind die Steuerdruckleitung 24 und die hydraulische Niederdruckleitung 25 miteinander verbunden sowie im Betätigungszustand des zweiten Vorsteuerventils 32 gegeneinander abgesperrt.

Somit wird der Steueranschluss 15 des Auslassventils 14 im unbetätigten Zustand der zugeordneten Vorsteuerventile 31, 32 mit dem niedrigen Steuerdruck beziehungsweise Umgebungsdruck beaufschlagt. Demzufolge befindet sich das Auslassventil 14 dann in der abgebildeten Ruhestellung, in der die Radbremsleitung 10 gegenüber der Rücklaufleitung 16' abgesperrt ist. Durch eine Betätigung, also das Umschalten der zugeordneten Vorsteuerventile 31, 32, wird die Steuerdruckleitung 24 von der hydraulischen Niederdruckleitung 25 getrennt und über das erste Vorsteuerventil 31 mit der hydraulischen Hochdruckleitung 23 verbunden. Hierdurch wird der Steueranschluss 15 des Auslassventils 14 mit dem in der hydraulischen Hauptdruckleitung 6 herrschenden Hauptdruck beaufschlagt, wodurch das Auslassventil 14 in seine Betätigungsstellung umgeschaltet wird, in der die Radbremsleitung 10 mit der Rücklaufleitung 16' verbunden ist. Die Funktionalität der beiden Vorsteuerventile 31, 32 des Auslassventils 14 entspricht somit der Funktionalität des Vorsteuerventils 22 der Ventilanordnung 2 gemäß Fig. 1.

Bei einer ABS-Steuerung, bei der die Vorsteuerventile 29, 30; 31, 32 über elektrische Steuerleitungen 33, 34; 35, 36 von der elektronischen Steuereinheit 26 angesteuert werden, wird der in der Radbremsleitung 10 herrschende und in dem Radbremszylinder 11 der Radbremse wirksame Bremsdruck wie zuvor durch wechselweises Öffnen und Schließen des Einlassventils 12 und des Auslassventils 14 moduliert.

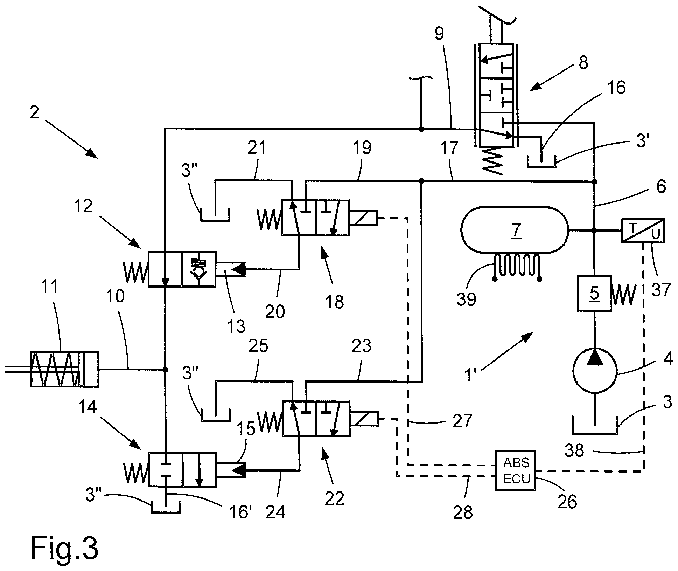

In Fig. 3 ist eine Weiterbildung der fremdkraftgestützten hydraulischen Bremsanlage eines Radfahrzeugs gemäß Fig. 1 in schematischer Form abgebildet, bei der die Druckluftversorgungsanlage 1' zusätzlich mit einem Temperatursensor 37 und einem Heizelement 39 versehen ist. Mittels des an oder in dem Speicherbehälter 7 der hydraulischen Druckversorgungsanlage 1' angeordneten Temperatursensors 37 wird die Öltemperatur des verfügbaren Hydrauliköls erfasst und über eine Sensorleitung 38 an die Steuereinheit 26
übermittelt. Hierdurch kann die Ansteuerung der Vorsteuerventile 12, 14 an die aktuelle Öltemperatur und damit an die Viskosität des Hydrauliköls angepasst werden. Über das an oder in dem Speicherbehälter 7 angeordnete Heizelement 39 kann das verfügbare Hydrauliköl erwärmt und damit dessen Viskosität reduziert werden. Dadurch kann insbesondere bei Verwendung von Hydrauliköl mit besonders hoher Viskosität die Zähflüssigkeit des Hydrauliköls im abgekühlten Zustand kurzfristig reduziert und damit die Steuerungseigenschaften der ABS-Ventile 12, 14 verbessert werden. Dabei kann eine Überhitzung des Hydrauliköls durch die Erfassung der Öltemperatur mittels des Temperatursensors 37 verhindert werden.

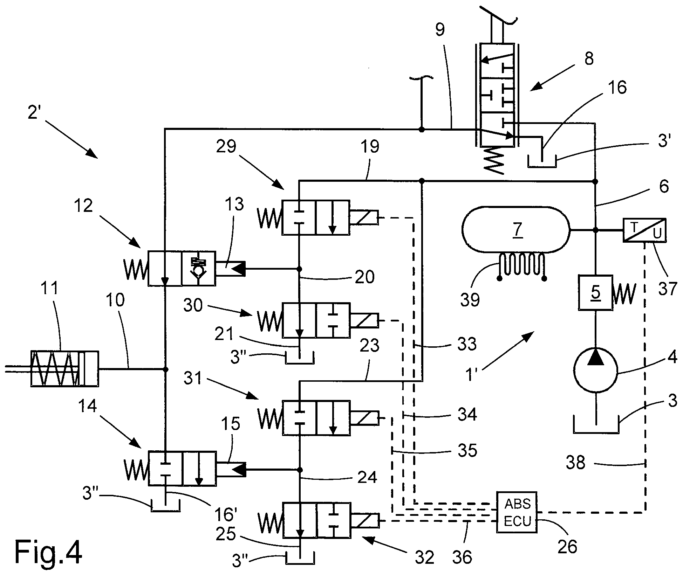

In Fig. 4 ist eine entsprechende Weiterbildung der fremdkraftgestützten hydraulischen Bremsanlage eines Radfahrzeugs gemäß Fig. 2 in schematischer Form abgebildet, bei der die Druckluftversorgungsanlage 1' in derselben Weise mit einem Temperatursensor 37 und einem Heizelement 39 versehen ist.

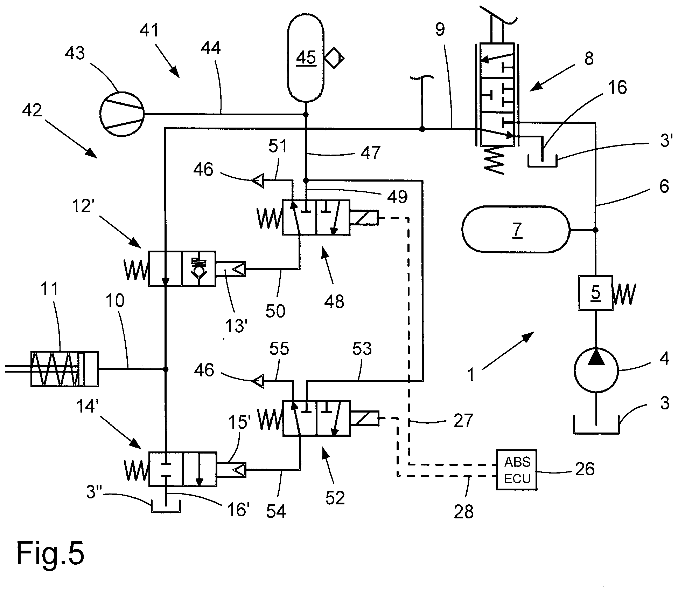

Eine in Fig. 5 in schematischer Form abgebildete fremdkraftgestützte hydraulische Bremsanlage eines Radfahrzeugs unterscheidet sich bei ähnlichem Aufbau von der hydraulischen Bremsanlage gemäß Fig. 1 durch eine zusätzliche pneumatische Druckversorgungsanlage 41 und eine geänderte Ventilanordnung 42 der ABS-Steuerung. In der pneumatischen Druckversorgungsanlage 41 ist Druckluft mittels eines Kompressors 43 in eine pneumatische Hauptdruckleitung 44 förderbar, an die auch ein Speicherbehälter 45 angeschlossen ist.

Bei gleicher bremstechnischer Funktion sind das Einlassventil 12' und das Auslassventil 14' nun als pneumatisch druckgesteuerte 2/2-Wege-Schaltventile mit entsprechend großen Schaltquerschnitten ausgebildet, denen vorliegend jeweils ein als 3/2-Wege-Magnet-schaltventil ausgebildetes Vorsteuerventil 48, 52 zugeordnet ist. Über die beiden Vorsteuerventile 48, 52 ist jeweils ein Steueranschluss 13', 15' des betreffenden Ein- oder Auslassventils 12', 14' zur Umschaltung wechselweise mit einem niedrigen oder hohen Steuerdruck beaufschlagbar.

Das Vorsteuerventil 48 des Einlassventils 12' ist zwischen einer pneumatischen Hochdruckleitung 49, die von einer an die pneumatische Hauptdruckleitung 44 angeschlossenen pneumatischen Steuerdruck-Hauptleitung 47 abzweigt, einer zu dem Steueranschluss 13' des Einlassventils 12' führenden Steuerdruckleitung 50 und einer an einen Entlüftungsausgang 46 führenden pneumatischen Niederdruckleitung 51 angeordnet. Im Ruhezustand, also im unbestromten Zustand der Magnetspule des Vorsteuerventils 48, ist die Steuerdruckleitung 50 gegenüber der pneumatischen Hochdruckleitung 49 abgesperrt und mit einer pneumatischen Niederdruckleitung 51 verbunden. Im Betätigungszustand, also im bestromten Zustand der Magnetspule des Vorsteuerventils 48, ist die Steuerdruckleitung 50 mit der pneumatischen Hochdruckleitung 49 verbunden sowie gegenüber der pneumatischen Niederdruckleitung 51 abgesperrt. Somit wird der Steueranschluss 13' des Einlassventils 12' im unbetätigten Zustand des zugeordneten Vorsteuerventils 48 mit dem niedrigen Steuerdruck beziehungsweise Umgebungsdruck beaufschlagt, wodurch das Einlassventil 12' in seiner abgebildeten Ruhestellung verbleibt beziehungsweise in diese umgeschaltet wird. Im betätigten Zustand des Vorsteuerventils 48 wird der Steueranschluss 13' des Einlassventils 12' dagegen mit dem in der pneumatischen Hauptdruckleitung 44 herrschenden Hauptdruck beaufschlagt, wodurch das Einlassventil 12' in seine Betätigungsstellung umgeschaltet wird beziehungsweise in dieser verbleibt.

Das Vorsteuerventil 52 des Auslassventils 14' ist zwischen einer von der Steuerdruck-Hauptleitung 47 abzweigenden Hochdruckleitung 53, einer zu dem Steueranschluss 15' des Auslassventils 14' führenden Steuerdruckleitung 54, und einer an einen Entlüftungsausgang 46 führenden pneumatischen Niederdruckleitung 55 angeordnet. Im Ruhezustand des Vorsteuerventils 52 ist die Steuerdruckleitung 54 gegenüber der Hochdruckleitung 53 abgesperrt und mit der pneumatischen Niederdruckleitung 55 verbunden. Im Betätigungszustand des Vorsteuerventils 52 ist die Steuerdruckleitung 54 mit der Hochdruckleitung 53 verbunden und gegenüber der pneumatischen Niederdruckleitung 55 abgesperrt. Somit wird der Steueranschluss 15' des Auslassventils 14' im unbetätigten Zustand des zugeordneten Vorsteuerventils 52 mit dem niedrigen Steuerdruck beziehungsweise Umgebungsdruck beaufschlagt, wodurch das Auslassventil 14' in seiner Ruhestellung verbleibt beziehungsweise in diese umgeschaltet wird. Im betätigten Zustand dieses Vorsteuerventils 52 wird der Steueranschluss 15' des Auslassventils 14' dagegen mit dem in der pneumatischen Hauptdruckleitung 44 herrschenden Hauptdruck beaufschlagt, wodurch das Auslassventil 14' in seine Betätigungsstellung umgeschaltet wird beziehungsweise in dieser verbleibt.

Die in Fig. 5 getrennt dargestellten Entlüftungsausgänge 46 der beiden Vorsteuerventile 48, 52 können separat ausgeführt oder in einem gemeinsamen Entlüftungsausgang zusammengefasst sein. Durch die pneumatische Ansteuerung der beiden ABS-Ventile 12', 14' können baugleiche Vorsteuerventile 48, 52 verwendet werden, die üblicherweise in Druckluftbremsanlagen zur Anwendung kommen.

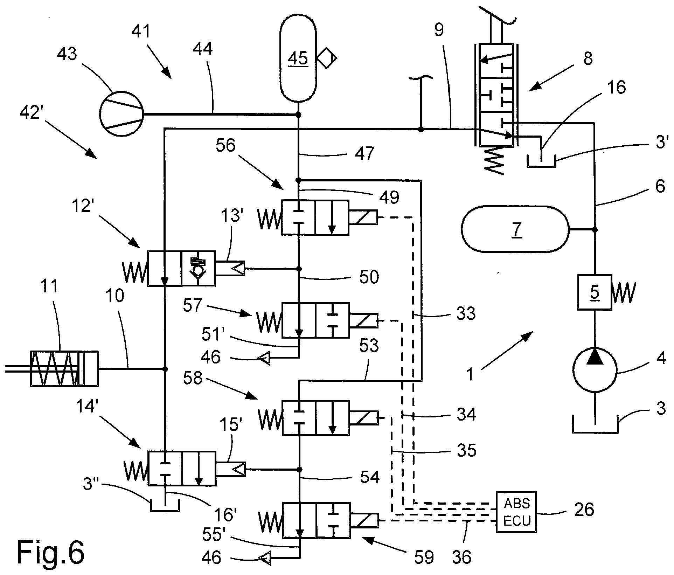

Die ABS-Steuerung der ABS-Ventile 12', 14', bei der die Vorsteuerventile 48, 52 über elektrische Steuerleitungen 27, 28 von einer elektronischen Steuereinheit 26 angesteuert werden, erfolgt analog zu der ABS-Steuerung der ABS-Ventile 12, 14 der Ventilanordnung 2 gemäß Fig. 1. Dabei erfolgt die Umschaltung der ABS-Ventile 12,' 14' im Rahmen der ABS-Steuerung unabhängig von der hydraulischen Druckversorgungsanlage 1 immer gleich schnell, da der hohe Steuerdruck über die Steuerdruck-Hauptleitung 47 an der pneumatischen Hauptdruckleitung 44 der pneumatischen Druckversorgungsanlage 41 abgegriffen wird, die unter einem konstant hohen Hauptdruck steht. Die in Fig. 6 in schematischer Form abgebildete fremdkraftgestützte hydraulische Bremsanlage eines Radfahrzeugs unterscheidet sich bei ähnlichem Aufbau von der hydraulischen Bremsanlage gemäß Fig. 2 durch die zusätzliche pneumatische Druckversorgungsanlage 41 und eine geänderte Ventilanordnung 42' der ABS-Steuerung. Das Einlassventil 12' und das Auslassventil 14' sind wie zuvor als pneumatisch druckgesteuerte 2/2-Wege-Schaltventile ausgebildet, denen nun jedoch jeweils zwei als 2/2-Wege-Magnetschaltventile ausgebildete Vorsteuerventile 56, 57; 58, 59 zugeordnet sind.

Das erste Vorsteuerventil 56 des Einlassventils 12' ist zwischen der an die Steuerdruck-Hauptleitung 47 angeschlossenen pneumatischen Hochdruckleitung 49 und der zu dem Steueranschluss 13' des Einlassventils 12' führenden Steuerdruckleitung 50 angeordnet. Im Ruhezustand, also im unbestromten Zustand der Magnetspule des ersten Vorsteuerventils 56, sind die pneumatische Hochdruckleitung 49 und die Steuerdruckleitung 50 gegeneinander abgesperrt und im Betätigungszustand, also im bestromten Zustand der Magnetspule des ersten Vorsteuerventils 56 miteinander verbunden. Das zweite Vorsteuerventil 57 des Einlassventils 12' ist zwischen der Steuerdruckleitung 50 und einer an einen Entlüftungsausgang 46 führenden pneumatischen Niederdruckleitung 51' angeordnet. Im Ruhezustand, also im unbestromten Zustand der Magnetspule des zweiten Vorsteuerventils 57, sind die Steuerdruckleitung 50 und die pneumatische Niederdruckleitung 51' miteinander verbunden, und im Betätigungszustand, also bestromten Zustand der Magnetspule des zweiten Vorsteuerventils 57 gegeneinander abgesperrt.

Somit wird der Steueranschluss 13' des Einlassventils 12' im unbetätigten Zustand der zugeordneten Vorsteuerventile 56, 57 mit dem niedrigen Steuerdruck beziehungsweise Umgebungsdruck beaufschlagt. Demzufolge befindet sich das Einlassventil 12' dann in der abgebildeten Ruhestellung, in der die Radbremsleitung 10 mit der Hauptbremsleitung 9 verbunden ist. Durch eine Betätigung, also das Umschalten der zugeordneten Vorsteuerventile 56, 57, wird die Steuerdruckleitung 50 von der pneumatischen Niederdruckleitung 51' getrennt und über das erste Vorsteuerventil 56 mit der pneumatischen Hochdruckleitung 49 verbunden. Hierdurch wird der Steueranschluss 13' des Einlassventils 12' mit dem in der pneumatischen Hauptdruckleitung 44 herrschenden Hauptdruck beaufschlagt, wodurch das Einlassventil 12' in seine Betätigungsstellung umgeschaltet wird, in der die Radbremsleitung 10 gegenüber der Hauptbremsleitung 9 abgesperrt ist. Die Funktionalität der beiden Vorsteuerventile 56, 57 des Einlassventils 12' entspricht somit der Funktionalität des Vorsteuerventils 48 der Ventilanordnung 42 gemäß Fig. 5.

Das erste Vorsteuerventil 58 des Auslassventils 14' ist zwischen der an die Steuerdruck-Hauptleitung 47 angeschlossenen Hochdruckleitung 53 und der zu dem Steueranschluss 15' des Auslassventils 14' führenden Steuerdruckleitung 54 angeordnet. Im Ruhezustand des ersten Vorsteuerventils 58 sind die Hochdruckleitung 53 und die Steuerdruckleitung 54 gegeneinander abgesperrt und im Betätigungszustand des ersten Vorsteuerventils 58 miteinander verbunden. Das zweite Vorsteuerventil 59 des Auslassventils 14' ist zwischen der Steuerdruckleitung 54 und einer an einen Entlüftungsausgang 46 führenden pneumatischen Niederdruckleitung 55' angeordnet. Im Ruhezustand des zweiten Vorsteuerventils 59 sind die Steuerdruckleitung 54 und die pneumatische Niederdruckleitung 55' miteinander verbunden und im Betätigungszustand des zweiten Vorsteuerventils 59 gegeneinander abgesperrt.

Somit wird der Steueranschluss 15' des Auslassventils 14' im unbetätigten Zustand der zugeordneten Vorsteuerventile 58, 59 mit dem niedrigen Steuerdruck beziehungsweise Umgebungsdruck beaufschlagt. Demzufolge befindet sich das Auslassventil 14' dann in der abgebildeten Ruhestellung, in der die Radbremsleitung 10 gegenüber der Rücklaufleitung 16' abgesperrt ist. Durch eine Betätigung, also das Umschalten der zugeordneten Vorsteuerventile 58, 59, wird die Steuerdruckleitung 54 von der pneumatischen Niederdruckleitung 55' getrennt und über das erste Vorsteuerventil 58 mit der Hochdruckleitung 53 verbunden. Hierdurch wird der Steueranschluss 15' des Auslassventils 14' mit dem in der pneumatischen Hauptdruckleitung 44 herrschenden Hauptdruck beaufschlagt, wodurch das Auslassventil 14' in seine Betätigungsstellung umgeschaltet wird, in der die Radbremsleitung 10 mit der Rücklaufleitung 16' verbunden ist. Die Funktionalität der beiden Vorsteuerventile 58, 59 des Auslassventils 14' entspricht somit der Funktionalität des Vorsteuerventils 52 der Ventilanordnung 42 gemäß Fig. 5.

### Bezugszeichenliste (Bestandteil der Beschreibung)

- 1, 1': Hydraulische Druckversorgungsanlage
- 2, 2': Ventilanordnung
- 3, 3', 3": Sammelbehälter, Ölsumpf
- 4: Ölpumpe
- 5: Druckbegrenzungsventil
- 6: Hydraulische Hauptdruckleitung
- 7: Speicherbehälter, Druckspeicher
- 8: Bremsventil
- 9: Hauptbremsleitung
- 10: Radbremsleitung
- 11: Betätigungseinheit, Radbremszylinder
- 12, 12': Einlassventil, ABS-Ventil
- 13, 13': Steueranschluss
- 14, 14': Auslassventil, ABS-Ventil
- 15, 15': Steueranschluss
- 16, 16': Rücklaufleitung
- 17: Hydraulische Steuerdruck-Hauptleitung
- 18: Vorsteuerventil, 3/2-Wege-Magnetschaltventil
- 19: Hydraulische Hochdruckleitung, welche zu dem Vorsteuerventil 18, 29, 30 führt
- 20: Steuerdruckleitung
- 21: Erste hydraulische Niederdruckleitung
- 22: Vorsteuerventil, 3/2-Wege-Magnetschaltventil
- 23: Hydraulische Hochdruckleitung, welche zu dem Vorsteuerventil 22, 31, 32 führt
- 24: Steuerdruckleitung
- 25: Zweite hydraulische Niederdruckleitung
- 26: Elektronische Steuereinheit
- 27: Elektrische Steuerleitung
- 28: Elektrische Steuerleitung
- 29: Erstes Vorsteuerventil, 2/2-Wege-Magnetschaltventil
- 30: Zweites Vorsteuerventil, 2/2-Wege-Magnetschaltventil
- 31: Erstes Vorsteuerventil, 2/2-Wege-Magnetschaltventil
- 32: Zweites Vorsteuerventil, 2/2-Wege-Magnetschaltventil
- 33: Elektrische Steuerleitung
- 34: Elektrische Steuerleitung
- 35: Elektrische Steuerleitung
- 36: Elektrische Steuerleitung
- 37: Temperatursensor
- 38: Sensorleitung
- 39: Heizelement
- 41: Pneumatische Druckversorgungsanlage
- 42, 42': Ventilanordnung
- 43: Kompressor
- 44: Pneumatische Hauptdruckleitung
- 45: Speicherbehälter, Druckspeicher
- 46: Entlüftungsausgang
- 47: Pneumatische Steuerdruck-Hauptleitung
- 48: Vorsteuerventil, 3/2-Wege-Magnetschaltventil
- 49: Pneumatische Hochdruckleitung, welche zu dem Vorsteuerventil 48, 56 führt
- 50: Steuerdruckleitung
- 51, 51': Erste pneumatische Niederdruckleitung
- 52: Vorsteuerventil, 3/2-Wege-Magnetschaltventil
- 53: Hochdruckleitung
- 54: Steuerdruckleitung
- 55, 55': Zweite pneumatische Niederdruckleitung
- 56: Erstes Vorsteuerventil, 2/2-Wege-Magnetschaltventil
- 57: Zweites Vorsteuerventil, 2/2-Wege-Magnetschaltventil
- 58: Erstes Vorsteuerventil, 2/2-Wege-Magnetschaltventil
- 59: Zweites Vorsteuerventil, 2/2-Wege-Magnetschaltventil

## Patentansprüche

1. Fremdkraftgestützte hydraulische Bremsanlage eines Radfahrzeugs, mit einer Hauptbremsleitung (9), in die mittels eines über ein Bremspedal betätigbaren Bremsventils (8) ein Soll-Bremsdruck einsteuerbar ist, und von der mehrere jeweils zu einer Betätigungseinheit (11) einer Radbremse führende Radbremsleitungen (10) abzweigen, sowie mit einer Ventilanordnung (2, 2', 42, 42') einer ABS-Steuerung, die jeweils ein zwischen der Hauptbremsleitung (9) und einer der Radbremsleitungen (10) angeordnetes Einlassventil (12, 12') sowie ein zwischen der betreffenden Radbremsleitung (10) und einer drucklosen Rücklaufleitung (16') angeordnetes Auslassventil (14, 14') umfasst, **dadurch gekennzeichnet, dass** das Einlassventil (12, 12') und das Auslassventil (14, 14') als druckgesteuerte 2/2-Wege-Schaltventile mit entsprechend großen Schaltquerschnitten ausgebildet sind, und dass dem Einlassventil (12, 12') und dem Auslassventil (14, 14') jeweils mindestens ein als Magnetschaltventil ausgebildetes Vorsteuerventil (18, 22; 29, 30, 31, 32; 48, 52; 56, 57, 58, 59) zugeordnet ist, über das ein Steueranschluss (13, 15; 13', 15') des betreffenden Ein- oder Auslassventils (12, 14; 12', 14') zur Umschaltung wechselweise mit einem Steuerdruck beaufschlagt oder entlüftet wird.

2. Bremsanlage nach Anspruch 1 **dadurch gekennzeichnet, dass** dem Einlassventil (12; 12') und/oder dem Auslassventil (14; 14') jeweils ein als 3/2-Wege-Magnetschalt-ventil ausgebildetes Vorsteuerventil (18, 22; 48, 52) zugeordnet ist, das zwischen einer mit einer Druckquelle in Verbindung stehenden Hochdruckleitung (19, 23; 49, 53), einer zu dem betreffenden Steueranschluss (13, 15; 13', 15') führenden Steuerdruckleitung (20, 24; 50, 54) und einer mit einer Drucksenke in Verbindung stehenden Niederdruckleitung (21, 25; 51, 55) angeordnet ist, wobei die Steuerdruckleitung (20, 24; 50, 54) im unbestromten Zustand des betreffenden Vorsteuerventils (18, 22; 48, 52) mit der Niederdruckleitung (21, 25; 51, 55) verbunden sowie gegenüber der Hochdruckleitung (19, 23; 49, 53) abgesperrt ist, und wobei die Steuerdruckleitung (20, 24; 50, 54) im bestromten Zustand des betreffenden Vorsteuerventils mit der Hochdruckleitung (19, 23; 49, 53) verbunden sowie gegenüber der Niederdruckleitung (21, 25; 51, 54) abgesperrt ist.

3. Bremsanlage nach Anspruch 1, **dadurch gekennzeichnet, dass** dem Einlassventil (12; 12') und/oder dem Auslassventil (14, 14') jeweils zwei als 2/2-Wege-Magnetschaltventile ausgebildete Vorsteuerventile (29, 30, 31, 32; 56, 57, 58, 59) zugeordnet sind, von denen das erste Vorsteuerventil (29, 31; 56, 58) zwischen einer mit einer Druckquelle in Verbindung stehenden Hochdruckleitung (19, 23; 49, 53) und einer zu dem betreffenden Steueranschluss (13, 15; 13', 15') führenden Steuerdruckleitung (20, 24; 50, 54) angeordnet ist, die im unbestromten Zustand des ersten Vorsteuerventils (29, 31; 56, 58) gegeneinander abgesperrt sowie im bestromten Zustand des ersten Vorsteuerventils (29, 31; 56, 58) miteinander verbunden sind, und von denen das zweite Vorsteuerventil (30, 32; 57, 59) zwischen der Steuerdruckleitung (20, 24; 50, 54) und einer mit einer Drucksenke in Verbindung stehenden Niederdruckleitung (21, 25; 51', 55') angeordnet ist, die im unbestromten Zustand des zweiten Vorsteuerventils (30, 32; 57, 59) miteinander verbunden sowie im bestromten Zustand des zweiten Vorsteuerventils (30, 32; 57, 59) gegeneinander abgesperrt sind.

4. Bremsanlage nach einem der Ansprüche 1 bis 3, **dadurch gekennzeichnet, dass** das Einlassventil (12) und das Auslassventil (14) hydraulisch steuerbar ausgebildet sind, dass die zu den zugeordneten Vorsteuerventile (18, 22; 29, 30, 31, 32) führenden hydraulischen Hochdruckleitungen (19, 23) von einer hydraulischen Steuerdruck-Hauptleitung (17) abzweigen, die an eine hydraulische Hauptdruckleitung (6) einer hydraulischen Druckversorgungsanlage (1) angeschlossen ist, und dass die an den zugeordneten Vorsteuerventile (18, 22; 29, 30, 31, 32) angeschlossenen hydraulischen Niederdruckleitungen (21, 25) in einen drucklosen Sammelbehälter (3") führen.

5. Bremsanlage nach Anspruch 4, **dadurch gekennzeichnet, dass** in der hydraulischen Druckversorgungsanlage (1) ein Temperatursensor (37) zur Erfassung der Öltemperatur des verfügbaren Hydrauliköls angeordnet ist.

6. Bremsanlage nach Anspruch 4 oder 5, **dadurch gekennzeichnet, dass** in der hydraulischen Druckversorgungsanlage (1) ein Heizelement (39) zur Erwärmung des verfügbaren Hydrauliköls vorgesehen ist.

7. Bremsanlage nach Anspruch 5 oder 6, **dadurch gekennzeichnet, dass** der Temperatursensor (37) und/oder das Heizelement (39) an oder in einem Speicherbehälter (7) der hydraulischen Druckversorgungsanlage (1) angeordnet sind.

8. Bremsanlage nach einem der Ansprüche 1 bis 3, **dadurch gekennzeichnet, dass** das Einlassventil (12') und das Auslassventil (14') pneumatisch steuerbar ausgebildet sind, dass die pneumatischen Hochdruckleitungen (49, 53) der zugeordneten Vorsteuerventile (48, 52; 56, 57, 58, 59) von einer pneumatischen Steuerdruck-Hauptleitung (47) abzweigen, die an eine pneumatische Hauptdruckleitung (44) einer pneumatischen Druckversorgungsanlage (41) angeschlossen ist, und dass die pneumatischen Niederdruckleitungen (51, 55; 51', 55') der zugeordneten Vorsteuerventile (48, 52; 56, 57, 58, 59) jeweils zu einem Entlüftungsausgang (46) führen.

## Claims

1. Power-operated hydraulic brake system for a wheeled vehicle, having a main brake line (9), into which a target brake pressure can be input by means of a brake valve (8) that can be actuated via a brake pedal, and from which a plurality of wheel brake lines (10), each of which leads to an actuating unit (11) of a wheel brake, branches off, and having a valve assembly (2, 2', 42, 42') of an ABS control system, which in each case comprises an inlet valve (12, 12') arranged between the main brake line (9) and one of the wheel brake lines (10) and comprises an outlet valve (14, 14') arranged between the relevant wheel brake line (10) and an unpressurized return line (16'), **characterized in that** the inlet valve (12, 12') and the outlet valve (14, 14') are designed as pressure-controlled 2/2-way switching valves with correspondingly large switching cross sections, and **in that** the inlet valve (12, 12') and the outlet valve (14, 14') are each assigned at least one pilot valve (18, 22; 29, 30, 31, 32; 48, 52; 56, 57, 58, 59) designed as a solenoid switching valve, via which a control port (13, 15; 13', 15') of the relevant inlet or outlet valve (12, 14; 12', 14') is alternately supplied with a control pressure or vented for the purpose of switching over.

2. Brake system according to Claim 1, **characterized in that** the inlet valve (12; 12') and/or the outlet valve (14; 14') is/are each assigned a pilot valve (18, 22; 48, 52) designed as a 3/2-way solenoid switching valve, which is arranged between a high-pressure line (19, 23; 49, 53) connected to a pressure source, a control pressure line (20, 24; 50, 54) leading to the relevant control port (13, 15; 13', 15'), and a low-pressure line (21, 25; 51, 55) connected to a pressure sink, wherein the control pressure line (20, 24; 50, 54) is connected to the low-pressure line (21, 25; 51, 55) and shut off from the high-pressure line (19, 23; 49, 53) in the deenergized state of the relevant pilot valve (18, 22; 48, 52), and wherein the control pressure line (20, 24; 50, 54) is connected to the high-pressure line (19, 23; 49, 53) and shut off from the low-pressure line (21, 25; 51, 54) in the energized state of the relevant pilot valve.

3. Brake system according to Claim 1, **characterized in that** the inlet valve (12; 12') and/or the outlet valve (14, 14') is/are each assigned two pilot valves (29, 30, 31, 32; 56, 57, 58, 59) designed as 2/2-way solenoid switching valves, of which the first pilot valve (29, 31; 56, 58) is arranged between a high-pressure line (19, 23; 49, 53) connected to a pressure source and a control pressure line (20, 24; 50, 54) leading to the relevant control port (13, 15; 13', 15'), which lines are shut off from one another in the deenergized state of the first pilot valve (29, 31; 56, 58) and are connected to one another in the energized state of the first pilot valve (29, 31; 56, 58), and of which the second pilot valve (30, 32; 57, 59) is arranged between the control pressure line (20, 24; 50, 54) and a low-pressure line (21, 25; 51', 55') connected to a pressure sink, which lines are connected to one another in the energized state of the second pilot valve (30, 32; 57, 59) and shut off from one another in the deenergized state of the second pilot valve (30, 32; 57, 59).

4. Brake system according to one of Claims 1 to 3, **characterized in that** the inlet valve (12) and the outlet valve (14) are of hydraulically controllable design, **in that** the hydraulic high-pressure lines (19, 23) leading to the associated pilot valves (18, 22; 29, 30, 31, 32) branch off from a hydraulic control pressure main line (17), which is connected to a hydraulic main pressure line (6) of a hydraulic pressure supply system (1), and **in that** the hydraulic low-pressure lines (21, 25) connected to the associated pilot valves (18, 22; 29, 30, 31, 32) lead into an unpressurized collecting tank (3'').

5. Brake system according to Claim 4, **characterized in that** a temperature sensor (37) for detecting the oil temperature of the available hydraulic oil is arranged in the hydraulic pressure supply system (1).

6. Brake system according to Claim 4 or 5, **characterized in that** a heating element (39) for heating the available hydraulic oil is provided in the hydraulic pressure supply system (1).

7. Brake system according to Claim 5 or 6, **characterized in that** the temperature sensor (37) and/or the heating element (39) is/are arranged on or in a storage reservoir (7) of the hydraulic pressure supply system (1).

8. Brake system according to one of Claims 1 to 3, **characterized in that** the inlet valve (12') and the outlet valve (14') are of pneumatically controllable design, **in that** the pneumatic high-pressure lines (49, 53) of the associated pilot valves (48, 52; 56, 57, 58, 59) branch off from a pneumatic control pressure main line (47), which is connected to a pneumatic main pressure line (44) of a pneumatic pressure supply system (41), and **in that** the pneumatic low-pressure lines (51, 55; 51', 55') of the associated pilot valves (48, 52; 56, 57, 58, 59) each lead to a vent outlet (46) .

## Revendications

1. Système de servofrein hydraulique d'un véhicule à roues, doté d'une conduite de frein principale (9), une pression de freinage de consigne pouvant être envoyée par commande dans celle-ci au moyen d'une soupape de freinage (8) actionnable par une pédale de frein, et de laquelle dérivent plusieurs conduites de frein de roue (10) menant respectivement à une unité d'actionnement (11) d'un frein de roue, ainsi que doté d'un arrangement de soupapes (2, 2', 42, 42') d'une commande ABS, lequel comprend respectivement une soupape d'admission (12, 12') agencée entre la conduite de frein principale (9) et une des conduites de frein de roue (10) ainsi qu'une soupape d'échappement (14, 14') agencée entre la conduite de frein de roue (10) en question et une conduite de retour (16') hors pression, **caractérisé en ce que** la soupape d'admission (12, 12') et la soupape d'échappement (14, 14') sont conçues comme des soupapes de commutation 2/2 voies avec des sections transversales d'écoulement de taille correspondante, et **en ce qu'**au moins une soupape de pilotage (18, 22 ; 29, 30, 31, 32 ; 48, 52 ; 56, 57, 58, 59) conçue comme soupape de commutation magnétique est attribuée respectivement à la soupape d'admission (12, 12') et à la soupape d'échappement (14, 14'), par la biais de laquelle un raccord de commande (13, 15 ; 13', 15') de la soupape d'admission ou d'échappement (12, 14 ; 12', 14') est alternativement sollicité avec une pression de commande ou purgé pour la commutation.

2. Système de frein selon la revendication 1, **caractérisé en ce qu'**une soupape de pilotage (18, 22 ; 48, 52) conçue comme soupape de commutation magnétique 3/2 voies est attribuée respectivement à la soupape d'admission (12, 12') et/ou à la soupape d'échappement (14, 14'), la soupape de pilotage étant agencée entre une conduite haute pression (19, 23 ; 49, 53) se trouvant en liaison avec une source de pression, une conduite de pression de commande (20, 24 ; 50, 54) menant au raccord de commande (13, 15 ; 13', 15') correspondant et une conduite basse pression (21, 25 ; 51, 55) se trouvant en liaison avec un réducteur de pression, dans lequel la conduite de pression de commande (20, 24 ; 50, 54) est reliée à la conduite basse pression (21, 25 ; 51, 55) dans l'état non alimenté de la soupape de pilotage (18, 22 ; 48, 52) correspondante ainsi qu'obstruée par rapport à la conduite haute pression (19, 23 ; 49, 53), et dans lequel la conduite de pression de commande (20, 24 ; 50, 54) est reliée à la conduite haute pression (19, 23 ; 49, 53) dans l'état alimenté de la soupape de pilotage correspondante ainsi qu'obstruée par rapport à la conduite basse pression (21, 25 ; 51, 55).

3. Système de frein selon la revendication 1, **caractérisé en ce que** deux soupapes de pilotage (29, 30, 31, 32 ; 56, 57, 58, 59) conçues comme soupapes de commutation magnétique 2/2 voies sont attribuées respectivement à la soupape d'admission (12, 12') et/ou à à la soupape d'échappement (14, 14'), parmi lesquelles la première soupape de pilotage (29, 31 ; 56, 58) est agencée entre une conduite haute pression (19, 23 ; 49, 53) se trouvant en liaison avec une source de pression et une conduite de pression de commande (20, 24 ; 50, 54) menant au raccord de commande (13, 15 ; 13', 15'), celles-ci étant obstruées l'une par rapport à l'autre dans l'état non alimenté de la première soupape de pilotage (29, 31 ; 56, 58) ainsi que reliées l'une à l'autre dans l'état alimenté de la première soupape de pilotage (29, 31 ; 56, 58), et parmi lesquelles la deuxième soupape de pilotage (30, 32 ; 57, 59) est agencée entre la conduite de pression de commande (20, 24 ; 50, 54) et une conduite basse pression (21, 25 ; 51', 55') se trouvant en liaison avec un réducteur de pression, celles-ci étant reliées l'une à l'autre dans l'état non alimenté de la deuxième soupape de pilotage (30, 32 ; 57, 59) ainsi qu'obstruées l'une par rapport à l'autre dans l'état alimenté de la deuxième soupape de pilotage (30, 32 ; 57, 59) .

4. Système de frein selon l'une des revendications 1 à 3, **caractérisé en ce que** la soupape d'admission (12) et la soupape d'échappement (14) sont conçues pour être commandables de manière hydraulique, **en ce que** les conduites haute pression hydrauliques (19, 23) menant aux soupapes de commande attribuées (18, 22 ; 29, 30, 31, 32) dérivent d'une conduite principale de pression de commande (17), qui est raccordée à une conduite de pression hydraulique principale (6) d'un système d'alimentation en pression hydraulique (1), et **en ce que** les conduites basse pression (21, 25) raccordées aux soupapes de commande attribuées (18, 22 ; 29, 30, 31, 32) mènent à un réservoir collecteur hors pression (3").

5. Système de frein selon la revendication 4, **caractérisé en ce qu'**un capteur de température (37) est agencé dans le système d'alimentation en pression hydraulique (1) pour la saisie de la température d'huile de l'huile hydraulique disponible.

6. Système de frein selon la revendication 4 ou 5, **caractérisé en ce qu'**un élément chauffant (39) est prévu dans le système d'alimentation en pression hydraulique (1) pour le réchauffage de l'huile hydraulique disponible.

7. Système de frein selon la revendication 5 ou 6, **caractérisé en ce que** le capteur de température (37) et/ou l'élément chauffant (39) sont agencés sur ou dans un réservoir de stockage (7) du système d'alimentation en pression hydraulique (1).

8. Système de frein selon l'une des revendications 1 à 3, **caractérisé en ce que** la soupape d'admission (12') et la soupape d'échappement (14') sont conçues pour être commandables de manière pneumatique, **en ce que** les conduites haute pression pneumatiques (49, 53) des soupapes de commande attribuées (48, 52 ; 56, 57, 58, 59) dérivent d'une conduite principale de pression de commande pneumatique (47), qui est raccordée à une conduite de pression pneumatique principale (44) d'un système d'alimentation en pression pneumatique (41), et **en ce que** les conduites basse pression pneumatiques (51, 55 ; 51', 55') des soupapes de commande attribuées (48, 52 ; 56, 57, 58, 59) mènent respectivement à une sortie d'évacuation de pression (46).
